# EUROPEAN PATENT SPECIFICATION

(11) **EP 0 391 496 B1**
(45) Date of publication and mention of the grant of the patent: **05.07.1995**
(21) Application number: 90200825.9
(22) Date of filing: 05.04.1990
(51) Int. Cl.: H04N 1/21

(54) **System for image information**
System zur Bildinformation
Système pour information d'image

(30) Priority: 05.04.1989 NL 8900842
(43) Date of publication of application: 10.10.1990
(73) Proprietor: Broekman, Hubertus Johannes Dinandus, NL-8225 KC Lelystad (NL)
(72) Inventor: Broekman, Hubertus Johannes Dinandus, NL-8225 KC Lelystad (NL)
(74) Representative: Land, Addick Adrianus Gosling

(56) References cited:
- EP-A- 0 170 469
- EP-A- 0 217 174
- EP-A- 0 258 976
- US-A- 4 395 740
- IEEE TRANSACTIONS ON COMMUNICATIONS, vol. COM-31, no. 2, February 1983, pages 245-250, IEEE, New York, US; R.D. GORDON: "An interactive video information terminal"
- IDEM
- MICROPROCESSING AND MICROPROGRAMMING, vol. 14, no. 5, December 1984, pages 267-272, Amsterdam, NL; P. RAYMONT: "Intelligent interactive instructional systems"

## Description

For map information, for example in tourist offices, there is a need for information in images, whether this be still or moving using animation, which is accessible in a user-friendly way. Animation of moving processes can also be of great importance for other technical or commercial purposes.

In "IEEE transactions and communications", Vol. COM-31 (1983), Feb., No. 2, (New York, USA) a system is described which comprises a laser video disc and a touch-sensitive infra-red screen. Information in this system can only be changed by arranging a new video disc in the system. The infra-red screen is not very robust and is not suitable for use in public areas.

In EP-A-0 258 976 an image reviewing station for picture archiving and communications systems are disclosed. In this known system a base memory is constituted by one or more video discs, which are connected through a network to terminals having a touch-sensitive screen for selecting stored image information, such as radiographs in a radiology department.

The present invention provides a stand alone system for storing image information and reproducing that stored image information, comprising:
- a touch-sensitive screen;
- control means for controlling storage and reproduction of image information;

wherein the control means are arranged such that a still image when depicted on the screen, is used for selecting a desired sequence of stored image information or reproduction of images; the image information for the touch-screen has a density of approximately 100 kbytes per screen image, the image information for a predetermined number of desired sequences is stored on a magnetic hard disc, said image information on the hard disc is updatable for changing the image information, in a remote way using telecommunication techniques; and a programme included in the system effects the updating of such image information. This system according to the present invention makes use of relatively inexpensive hardware which can be arranged in a cabinet of limited size while user-friendliness is achieved for the use of a touch screen so that a QWERTY-key board can be dispensed with.

Because the stand alone system according to the present invention makes use of magnetic hard discs and not, for example, with an optical ROM memory, changes in presentations for the user on basis of the image information can be easily carried out so that if the systems are disposed peripherally changes in such presentations can be easily carried out remotely.

A touch screen is preferably employed wherein the actuation of the control means is based on the influencing of electrical charge on the screen by a finger, preferably of the brand-name Microtouch®, as this screen has been found to be robust and reliable.

The present invention will be further elucidated with reference to a description of a preferred embodiment thereof, with reference to a drawing in which:
fig. 1 shows a perspective, partly diagrammatic view of a preferred embodiment of the system according to the present invention;
fig. 2 shows a diagram of the system from fig. 1;
fig. 3 shows a diagram of the operation of the system of fig. 2; and
fig. 4 is a diagram of the mutual coupling of information files in the system of fig. 1.

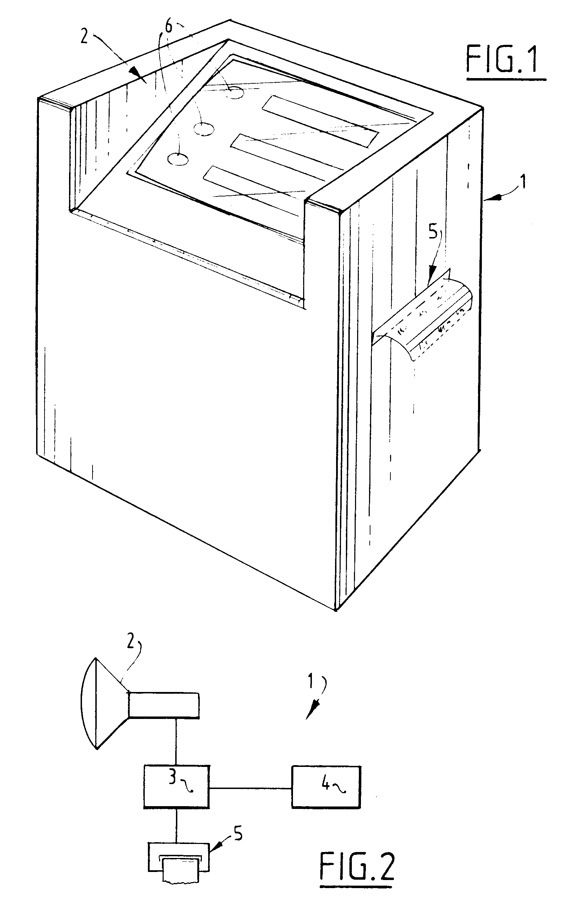

Arranged in a cabinet 1 is a touch screen 2 (fig. 1, 2) to which is connected, as designated schematically, a control means 3 and a memory in the form of a hard disc 4. A still image suitable for touch can be made visible on the screen by the control means 3 wherewith by touching certain places 6 on the screen a series of images, for example animations, can be retrieved by the user from the hard disc memory via the control means 3.

In the preferred embodiment shown use is made for storing and coupling together determined image information of the AMIGA® Intuition® programme, wherein images with a density of about 100 kbytes, that is, of slide quality, can be brought onto the screen.

The touch screen 2 is of the brand-name Micro Touch® and an interface for interaction with the control means 3 was designed herefor.

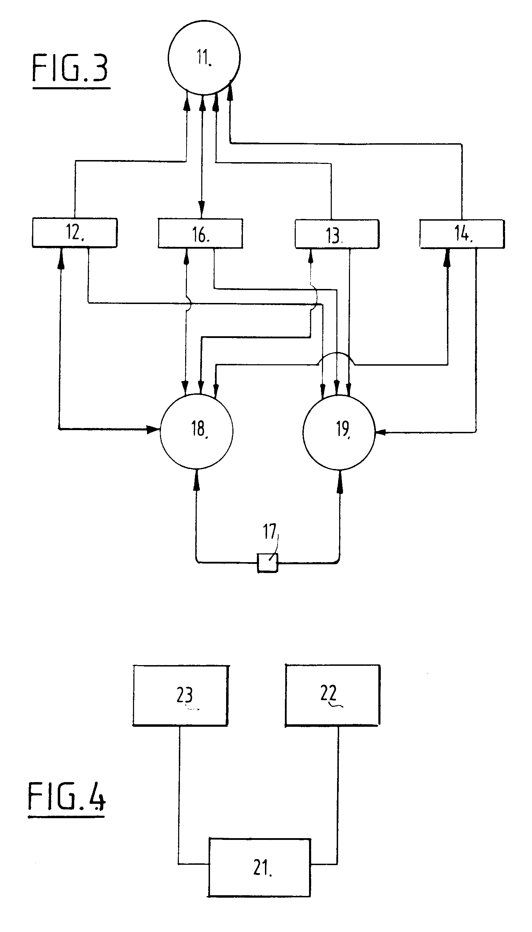

As schematically indicated (fig. 3) a presentation 11 is coupled with a particular menu selection 12, with text information 13 for printing and information 14 for the language in which the various material has to be produced. In the presentation 11 selections can be indicated which are registered by means of software in the block 16 and from which selections can again be returned. At block 17 image information can be entered using the above mentioned AMIGA® programme and a presentation which is immediately suitable for a presentation 11 can be built up at node 18 with the programme stored in the control means. A section 19 is coupled to the blocks 12, 13, 14, 16 in order to check a correct operation of various functions. In this section 19 can also be determined for instance how often particular menus and selections are actuated, which can be of importance for different purposes.

The preferred embodiment of the present invention also makes it possible, in a manner not shown, to construct and/or change a particular menu selection for a particular presentation.

Indicated in schematic form (fig. 4) is that a particular "file" 21 in which data for images is stored is connected to both the programme 22 for presentation on the screen and to a programme 23 wherewith changes in the presentation and/or a new presentation can be recorded in the memory or file.

As the memory is provided with a magnetic hard disc and not, for example, an optical ROM memory, changes in the presentations can be easily carried out so that if the systems are disposed peripherally a so-called updating can be carried out remotely for example via a telephone line.

Preferably, as indicated in fig. 3, the language of a presentation can be changed at any desired moment.

Textual information which can be printed on request using a printer unit (fig. 1) is preferably also coupled with the information for the graphic images stored on the hard disc.

With the preferred embodiment described above parts of the system take the form of software. It should be apparent that one or more parts of the system can also be embodied as hardware. The present invention is of course not limited to the embodiment which makes use of the AMIGA® programme.

## Claims

1. A stand alone system for storing image information and reproducing that stored image information, comprising:
- a touch-sensitive screen (2);
- control means (3) for controlling storage and reproduction of image information;
wherein the control means (3) are arranged such that a still image when depicted on the screen, is used for selecting a desired sequence of stored image information or reproduction of images; the image information for the touch-screen has a density of approximately 100 kbytes per screen image, the image information for a predetermined number of desired sequences is stored on a magnetic hard disc, said image information on the hard disc is updatable for changing the image information, in a remote way using telecommunication techniques; and a programme (23) included in the system effects the updating of such image information.

2. A stand alone system according to claim 1, wherein the control means comprises the AMIGA® Intuition® programme.

3. A stand alone system according to claim 1 or 2, wherein coupled with the image information is textual information which after the relevant selection of the user can be printed by a printer unit (5).

4. A stand alone system according to any of the claims 1-3, provided with image information, still images and/or printable information in two or more languages, wherein the control means (3) are arranged such that at any moment desired by the user the language can be changed.

5. A stand alone system according to any of the foregoing claims, provided with one or more counting registers wherein is stored a number of times that one or more image information reproductions are utilized.

6. A stand alone system according to any of the preceding claims, wherein the touch-sensitive screen (2) is provided with a charge which can be influenced by a finger and is preferably a Microtouch® screen.

## Patentansprüche

1. Allein operierendes System zur Speicherung von Bildinformationen und zur Wiedergabe dieser gespeicherten Bildinformationen, mit
- einem Tast-Bildschirm (2) und
- Steuermitteln (3) zur Steuerung der Speicherung und Wiedergabe von Bildinformationen,
bei dem die Steuermittel (3) so ausgebildet sind, daß ein auf dem Bildschirm gezeigtes Stehbild zum Auswählen einer gewünschten Folge gespeicherter Bildinformationen oder einer Bildwiedergabe verwendet wird, die Bildinformationen für den Tast-Bildschirm eine Dichte von etwa 100 Kilobyte pro Bildschirmbild aufweisen, die Bildinformationen für eine vorgebene Anzahl gewünschter Folgen auf einer magnetischen Festplatte gespeichert werden, wobei zur Änderung der Bildinformationen diese auf der Festplatte gespeicherte Bildinformationen durch Anwendung fernmeldetechnischer Verfahren aus der Ferne aktualisiert werden können und ein in dem System vorgesehenes Programm die Aktualisierung dieser Bildinformationen bewirkt.

2. Allein operierendes System nach Anspruch 1, bei dem die Steuermittel das AMIGA® Intuition®-Programm umfassen.

3. Allein operierendes System nach Anspruch 1 oder 2, bei dem mit den Bildinformationen Textinformationen verbunden sind, die nach der entsprechenden, vom Benutzer getroffenen Auswahl von einer Druckereinheit (5) gedruckt werden können.

4. Allein operierendes System nach einem der Ansprüche 1 bis 3, für das Bildinformationen, Stehbilder und/oder druckbare Informationen in zwei oder mehr Sprachen vorgesehen sind, wobei die Steuermittel (3) so ausgebildet sind, daß der Benutzer jederzeit die Sprache ändern kann.

5. Allein operierendes System nach einem der vorhergehenden Ansprüche, für das ein oder mehrere Zählregister vorgesehen ist/sind, in dem/denen gespeichert wird, wie oft eine oder mehrere Bildinformationen-Wiedergabe(n) genutzt wird/werden.

6. Allein operierendes System nach einem der vorhergehenden Ansprüche, bei dem der Tast-Bildschirm (2) eine Ladung erhält, die mit dem Finger beeinflußt werden kann, und vorzugsweise ein Microtouch®-Bildschirm ist.

## Revendications

1. Système autonome pour stocker une information d'image et reproduire cette information d'image stockée, comprenant:
- un écran tactile (2);
- des moyens de commande (3) pour commander le stockage et la reproduction d'une information d'image;
dans lequel les moyens de commande (3) sont agencés de manière qu'une image fixe, lorsqu'elle est représentée sur l'écran, est utilisée pour sélectionner une séquence souhaitée d'informations d'images stockées ou de reproductions d'images; l'information d'image pour l'écran tactile a une densité d'approximativement 100 multiplets par image d'écran, l'information d'image, pour un nombre prédéterminé de séquences souhaitées, est stockée sur un disque dur magnétique, ladite information d'image sur le disque dur peut être mise à jour pour modifier l'information d'image, à distance, en utilisant des techniques de télécommunication; et un programme (23) inclus dans le système effectue la mise à jour d'une telle information d'image.

2. Système autonome selon la revendication 1, dans lequel les moyens de commande comprennent le programme AMIGA® Intuition®.

3. Système autonome selon la revendication 1 ou 2, dans lequel une information textuelle, qui, après la sélection concernée par l'utilisateur, peut être imprimée par une unité d'imprimante (5), est couplée avec l'information d'image.

4. Système autonome selon l'une quelconque des revendications 1-3, pourvu d'une information d'image, d'images fixes et/ou d'une information pouvant être imprimée en deux langues ou davantage, dans lequel les moyens de commande (3) sont agencés de manière qu'à tout moment souhaité par l'utilisateur, la langue puisse être modifiée.

5. Système autonome selon l'une quelconque des revendications précédentes, pourvu d'un ou plusieurs registres de comptage dans lesquels est stocké le nombre d'utilisations d'une ou plusieurs reproductions d'informations d'images.

6. Système autonome selon l'une quelconque des revendications précédentes, dans lequel l'écran tactile (2) est pourvu d'une charge qui peut être influencée par le doigt, et est de préférence un écran Microtouch®.
